Europäisches Patentamt

European Patent Office

Office européen des brevets

(11) Publication number: **0 282 772 B1**

## EUROPEAN PATENT SPECIFICATION

(45) Date of publication of patent specification: **13.05.92**

(51) Int. Cl.⁵: **F25B 5/00**, F25B 13/00, F25B 49/00, F25B 41/06

(21) Application number: **88102637.1**

(22) Date of filing: **23.02.88**

(54) Operating method for an air conditioning system.

(30) Priority: **20.03.87 JP 63853/87**

(43) Date of publication of application:
**21.09.88 Bulletin 88/38**

(45) Publication of the grant of the patent:
**13.05.92 Bulletin 92/20**

(84) Designated Contracting States:
**DE FR GB**

(56) References cited:
**DE-A- 3 523 818**       **GB-A- 2 167 849**
**GB-A- 2 183 018**       **US-A- 4 307 576**
**US-A- 4 644 756**       **US-A- 4 685 309**

(73) Proprietor: **HITACHI, LTD.**
**6, Kanda Surugadai 4-chome**
**Chiyoda-ku, Tokyo 100(JP)**

(72) Inventor: **Yamazaki, Kenji**
**Hitachi Fujimiryo 21, 9-14 Numatacho**
**Shimizu-shi(JP)**
Inventor: **Sotome, Kaname**
**Seiunryo 556-1, Totsukacho**
**Totsuka-ku Yokohama(JP)**
Inventor: **Yoshikawa, Tomio**
**20-1, Hitachicho**
**Shimizu-shi(JP)**
Inventor: **Hiyoshi, Tsuyoshi**
**Hitachi Fujimiryo 43 9-14, Numatacho**
**Shimizu-shi(JP)**
Inventor: **Seki, Osamu**
**19-22, Midorigaokacho**
**Shimizu-shi(JP)**

(74) Representative: **Ebbinghaus, Dieter et al**
**v. FÜNER, EBBINGHAUS, FINCK Patentan-**
**wälte European Patent Attorneys Mariahilf-**
**platz 2 & 3**
**W-8000 München 90(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

The present invention relates to an operating method for an air conditioning system comprising a heat pump type refrigeration cycle in which a plurality of indoor units are connected to an outdoor unit, and a refrigerant flow is controlled by electric expansion valves under PID control. An air conditioning system of this kind is disclosed in document US-A-4 307 576.

In a conventional air conditioning system incorporating a heat pump type refrigeration cycle, an opening degree of an electric expansion valve is set to a particular initial level at a start of the respective operational conditions such as cooling, heating and defrosting modes, in response thereto. However, the operational condition changes have not been taken into consideration, such as change in capacity of the compressor and in the number of the operating indoor units during the operation of the system. Accordingly, in case of the air conditioning system in which the compressor is controlled in the capacity thereof by an inverter or in which a plurality of outdoor units are connected to an indoor unit, it is impossible to make the refrigerant conditions steady within a short period of time, which are disturbed due to the change of the operational conditions of the system.

Further, there has been proposed an air conditioning system, disclosed for example in US-A-3,788,386, in which conditioned air is supplied to a multiplicity of zones so as to air condition the respective zones. However, such air conditioning system has neither intention of absorbing the excessive change of the refrigerant in the refrigeration cycle in the pressure and the temperature, which is caused by the change of the load or by start or stop of the indoor units, nor intention of making the operation of the refrigeration cycle steady.

Accordingly, an object of the present invention is to provide a method for operating an air conditioning system which can make the operational conditions of the refrigerant steady within a short period of time even if the operational conditions of the system are changed.

According to the present invention this object is solved by the method described in the claim.

The invention is further described with reference to the accompanying drawings in which:

Fig. 1 is a piping diagram showing an air conditioning system of the heat pump type operated according to the present invention;

Fig. 2 is a graph showing changes of the compressor input frequency, the opening degree of the expansion valves and the temperature of the gaseous refrigerant from the compressor, respectively, under the conventional PID control only;

Fig. 3 is a graph showing changes of the compressor input frequency, the opening degree of the expansion valves and the temperature of the gaseous refrigerant from the compressors respectively, according to the present invention;

Fig. 4 is a flow chart showing the control of the apparatus shown in Fig. 1;

Fig. 5 is a graph showing the relationship between the compressor input frequency and the set opening degree of the expansion valves; and

Fig. 6 is a graph showing the relationship between the indoor unit horse power and the set opening degree of the expansion valve.

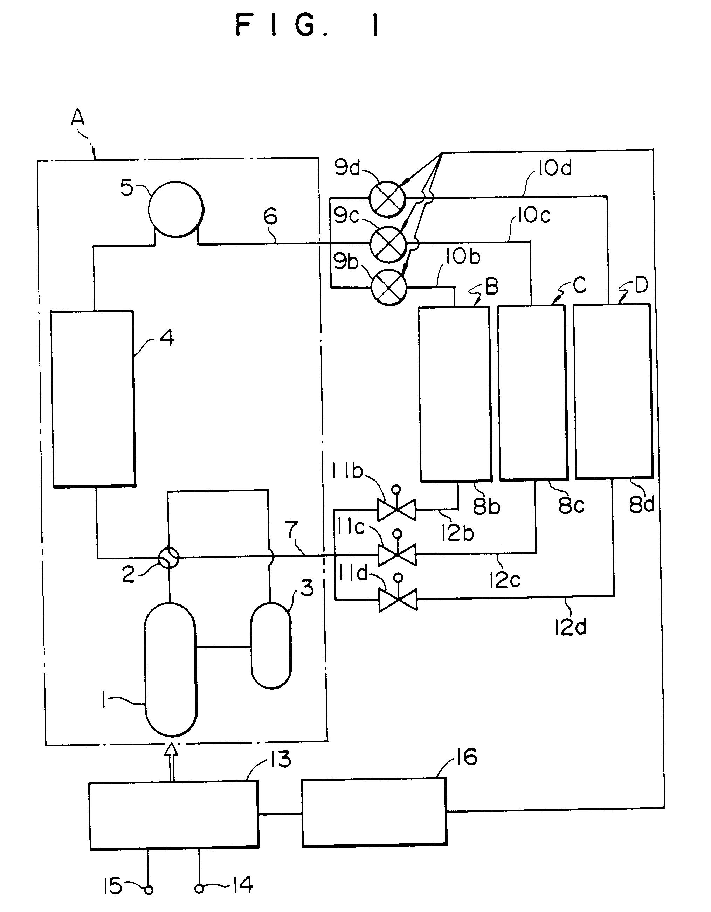

The present invention will be described hereinunder with reference to the apparatus shown in Fig. 1. The air conditioning system comprises a single outdoor unit A and three indoor units B, C and D connected to the outdoor unit A. The indoor unit A includes a compressor 1, a four-way valve 2, an accumulator 3, an outdoor heat exchanger 4 and a receiver 5. The indoor units B, C and D comprise indoor heat exchangers 8b, 8c and 8d, respectively. Electric reversible expansion valves 9b, 9c and 9d are disposed in the respective liquid side branched pipes 10b, 10c and 10d through which the low temperature and low pressure liquid refrigerant flows during the cooling mode. In the same manner, solenoid valves 11b, 11c and 11d are disposed in the respective gas side branched pipes 12b, 12c and 13d through which the low temperature and low pressure gaseous refrigerant flows during the cooling operation. The receiver 5 is disposed in a liquid side primary pipe 6 through which the liquid refrigerant flows during the cooling mode. A gas side primary pipe 7 through which the low temperature and low pressure gaseous refrigerant flows during the cooling operation is connected to the four-way valve 2. A control system is also provided, which includes a primary controller 13 for controlling operational conditions such as frequency of the compressor or the like, a terminal board 14 for delivering set-up values of a room temperature into the primary controller 13, a sensor means 15 for detecting the room temperature, the gaseous refrigerant temperature and the like, and an expansion valve opening degree outputting means 16 for calculating and outputting a suitable opening degree of the expansion valve in accordance with the operational condition. Thus, the various components in the outdoor unit A and in the indoor units B, C and D are connected to each other as shown in Fig. 1, thereby forming a heat pump type refrigeration cycle.

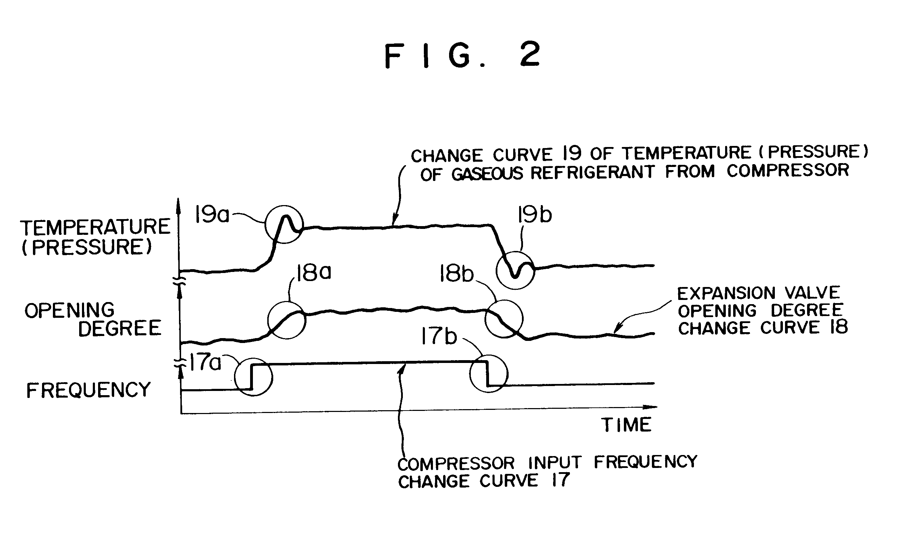

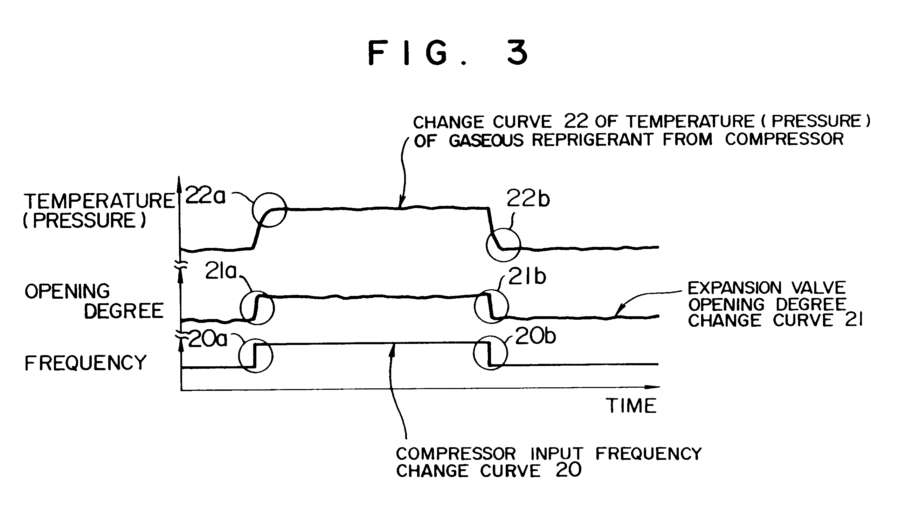

Fig. 2 shows the compressor input frequency change 17, the expansion valve opening degree change 18 and the change 19 of the temperature (pressure) of the gaseous refrigerant discharged from the compressor, respectively, during a control operation of the electric expansion valves in accordance with a conventional PID (proportion, integration and differentiation) control. The reference characters 17a, 18a and 19a denote the respective changes when the compressor input frequency is increased and the reference characters 17b, 18b and 19b denote the respective changes when the compressor input frequency is decreased. Fig. 3 shows the compressor input frequency change 20, the expansion valve opening degree change 21 and the change 22 of the temperature (pressure) of the gaseous refrigerant discharged from the compressor, respectively, during a control operation of the electric expansion valves in accordance with the present invention in addition to the conventional PID control. In the same manner as in Fig. 2, the reference characters 20a, 21a and 22a in Fig. 3 denote the respective changes when the compressor input frequency is increased and the reference characters 20b, 21b and 22b denote the respective changes when the compressor input frequency is decreased.

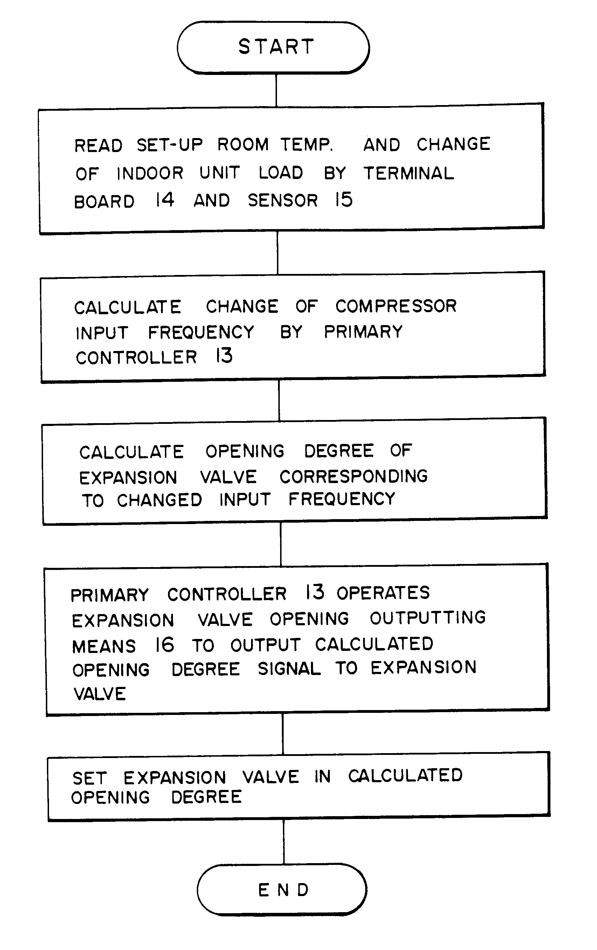

Fig. 4 shows a flow chart of such control.

The operation of the thus constructed system will now be described hereinunder. In the cooling operation of the system, the four-way valve 2 is switched over into the position shown in Fig. 1. The high temperature and high pressure gaseous refrigerant compressed in the compressor 1 is pumped out to the outdoor heat exchanger 4 in which the gaseous refrigerant is heat-exchanged with and cooled by air forcedly blown by a blower so as to become the high pressure liquid refrigerant. A part of the liquid refrigerant is stored in the receiver 5 but almost all thereof is allowed to flow through the liquid side primary pipe 6 into the liquid side branched pipes 10b to 10d. The liquid refrigerant is reduced in the pressure thereof and expanded in the electric expansion valves 9b, 9c and 9d so as to become the low temperature and low pressure gaseous refrigerant. Such gaseous refrigerant is introduced into the respective indoor heat exchangers 8b, 8c and 8d in the indoor units B, C and D. In the heat exchangers 8b, 8c and 8d, an interior air in the room forcedly blown by a blower is heat-exchanged with the gaseous refrigerant and cooled to air condition the room. The low pressure refrigerant gas which has been heat-exchanged with the interior air flows through the gas side branched pipes 12b, 12c and 12d at the outlet side of the indoor heat exchangers 8b, 8c and 8d. The low pressure refrigerant flows through the respective solenoid valves 11b, 11c and 11d. Thereafter it flows through the gas side primary pipe 7 into the accumulator 3 via the four-way valve 2. In the accumulator 3, gas/liquid separation is effected so that solely the gaseous refrigerant is introduced into the compressor 1 to complete the refrigeration cycle. The compressor 1 is frequency controlled in the input frequency thereof by means of an inverter in the primary controller 13 in accordance with the set-up room temperature and the room temperature detected by the sensor 15, so that the capacity of the compressor 1 is controlled. The respective electric expansion valves 9b, 9c and 9d are operated under the PID control in accordance with the indoor heat exchanger temperature and the set-up room temperature, the room temperature and the degree of superheat of the refrigerant, and the ability of the indoor unit.

To the contrary, in the heating operation of the system, the four-way valve 2 is so switched over that the high temperature and high pressure gaseous refrigerant is allowed to flow through the solenoid valves 11b, 11c and 11d into the indoor heat exchangers 8b, 8c and 8d. Therefore, interior air is heated and heating operation is performed. The refrigerant flows to form a refrigeration cycle reverse to the above-mentioned cycle in the cooling operation.

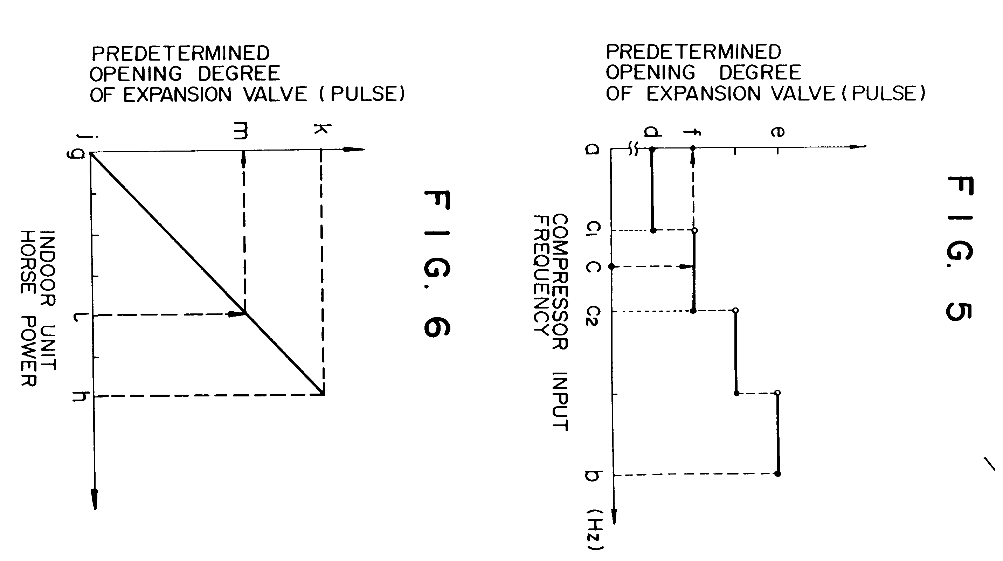

In the cooling or heating operation, when the set-up room temperature set by the terminal board 14 is changed or when the terminal load change in the room is detected by the sensor 15, the primary controller 13 receives data representing such changes and frequency-controls the compressor in the input frequency thereof in accordance with the operational conditions, in compliance with the control flow shown in Fig. 4. Further, the opening degrees of the expansion valves 9b, 9c and 9d is promptly controlled by the expansion valve opening degree outputting means 16 so as to satisfy the predetermined relationship between the input frequency and the opening degree of the expansion valve shown in Fig. 5.

The discrete opening degrees of the expansion valve between $d$ and $e$ is so determined that the refrigerant conditions are stabilized in response to the compressor input frequency between a lower limit $a$ and an upper limit $b$. The pattern of such relationship between the compressor input frequency and the opening degree of the expansion valve is stored in the expansion valve opening degree outputting means 16. If it is decided by the primary controller 13 that the compressor input frequency is changed, for example, to a frequency $C$, the means 16 calculates or selects the opening degree $f$ on the basis of the numerically expressed above-mentioned relationship (Fig. 5) stored in the means 16. The means 16 outputs the value $f$ for a predetermined period of time into the respective expansion valves associated with the indoor units which have been subjected to the PID control. Thereafter, such expansion valves are subjected to the PID control again, so that it is possible to stabilize the refrigerant condition within a short period of time. In this case, the expansion valve opening degree is set at a constant value f in a frequency zone between C1 and C2. A plurality of such zones is provided between the frequency a and b. On the contrary, in case where the number of the operating indoor units is changed, the opening degree of the expansion valve is changed to the set-up value which is predetermined on the basis of the relationship between the horse power of the operating indoor unit and the opening degree (pulse) of the expansion valve as shown in Fig. 6. The opening degrees of the expansion valve between j and k is so determined that the refrigerant conditions are stabilized in response to the horse power of the operating indoor unit between a lower limit g and an upper limit h. The pattern of such relationship between the horse power of the operating indoor unit and the opening degree of the expansion valve associated therewith is stored in 16. In case where the indoor unit of a horse power l is, for example, started or continued to be operated, the means 16 receives the informations from the primary controller 13 and calculates or selects the opening degree m on the basis of the numerically expressed above-mentioned relationship (Fig. 6) stored in the means 16. The means 16 outputs the value m for a predetermined period of time into the respective expansion valves associated with the indoor units which have been subjected to the PID control or into the expansion valve associated with the inoperating indoor unit to be started. Thereafter, such expansion valve are subjected to the PID control again, so that it is possible to stabilize the refrigerant condition within a short period of time.

In the conventional technique, the opening degree of the electric expansion valve is controlled solely by the PID control so as to stabilize the temperature of the refrigerant from the compressor even if the conditions of the refrigerant is fluctuated as described above. However, in the PID control, it is impossible to well follow the large fluctuation of the refrigerant conditions, e.g. change of the capacity of the compressor, as shown in Fig. 2. In case that the input frequency of the compressor is changed as designated by the curve 17 in Fig. 2, the opening degree of the expansion valve is changed slowly or moderately to response such change of the input frequency, as designated by the curve 18 in Fig. 2, resulting in a temporal excessive increase of the temperature of the refrigerant from the compressor as designated by 19a. Accordingly, it is required to take a long period of time to stabilize the temperature of the refrigerant from the compressor. Further, since the temperature of the refrigerant is temporarily and excessively increased, there is undesirably occurred an operation of the compressor protective means which is to be operated on the excessive increase of the refrigerant temperature. This phenomenon may occur on the decrease of the input frequency as designated by 17b, 18b and 19b.

According to the above embodiment, the predetermined opening degrees of the expansion valve which correspond to the compressor input frequency are calculated in advance, which is able to stabilize the refrigerant conditions after the load thereof is changed, and when the input frequency is changed, the PID control is interrupted and the opening degree of the expansion valve is set to the predetermined degree which correspond to the changed input frequency. Therefore, it is possible to stabilize the refrigerant conditions within a short period of time. After the refrigerant conditions become steady, the PID control is applied again. Accordingly, in case that the increase of the compressor input frequency is occurred as designated by 20a in Fig. 3, the opening degree of the expansion valve is set to the steady opening degree without any time lag as designated by 21a, whereby the temperature of the gaseous refrigerant from the compressor becomes steady state within a short period of time as designated by 21a, which temperature represents the refrigerant condition. This phenomenon may occur on the decrease of the input frequency as designated by 20b, 21b and 22b.

In this embodiment, the temperature of the gaseous refrigerant from the compressor is employed as a parameter representative of the refrigerant condition. However, the present invention is not limited to this, any other parameter, e.g. the pressure of the gaseous refrigerant from the compressor may be employed.

As described above, the primary controller controls the compressor input frequency on the basis of the change of the set-up room temperature and the room temperature, and sets and controls the indoor units selected by the user. The PID control is interrupted and then the expansion valve opening degree outputting means outputs a command, in accordance with the operation conditions thereof, to the expansion valve to change the opening degree thereof into the set opening degree predetermined in accordance with the operation conditions, by which set opening degree the refrigeration cycle of the heat pump type is stabilized. Accordingly, it becomes possible to minimize the delay of time between the time when the operation condition changes and when the refrigerant condition becomes steady state. Accordingly it can be possible to prevent the compressor protective means to operate due to the excessive increase of the temperature of the gaseous refrigerant from the compressor.

The present invention, on the contrary, provides an operation method for an air conditioning system, in which, on the basis of the signal representing the air conditioning load or the signal representing the change of the number of the operating indoor units, the compressor input frequency and the degree of the expansion valve are simultaneously so controlled that the temperature (pressure) of the gaseous refrigerant from the compressor can be smoothly changed. The present invention also provide a control method for an air conditioning system, in which, on the basis of either the signal representing the air conditioning load or the signal representing the change of the number of the operating indoor units, the compressor input frequency and the degree of the expansion valve are simultaneously controlled.

As described above, according to the present invention, it is possible to make the operational conditions optimum and steady within a short period of time even if the operational conditions are changed during air conditioning. Therefore, it is possible to avoid the interruption of the operation of the system, since it is prevented that the protective means undesirably operates, whereby a comfortable air conditioning is provided.

## Claims

1. A method for operating an air conditioning system comprising a refrigeration cycle including a compressor (1) the capacity of which is controllable, an outdoor unit (A) having an outdoor heat exchanger (4), a plurality of indoor units (B,C,D) each having an indoor heat exchanger (8b,8c,8d), which are disposed parallel to each other, solenoid valves (11b,11c,11d) each provided in the respective lines (12b,12c,12d) connected to said indoor heat exchangers, through which gaseous refrigerant flows, and expansion valves (9b,9c,9d) provided in the respective lines (10b,10c,10d) connected to said indoor heat exchangers, through which lines liquid refrigerant flows, said method comprising controlling said expansion valves by PID control on the basis of operational conditions, characterized in that the PID control is interrupted when changing the compressor speed and/or the number of operating units, that the input frequency of said compressor and the opening degree of said expansion valves are controlled simultaneously on basis of signals representing an air conditioning load and/or representing a change of the number of operating indoor units, and that thereafter the PID control is resumed when the refrigerant conditions have become steady.

## Revendications

1. Procédé pour faire fonctionner un système de conditionnement d'air comprenant un cycle de réfrigération incluant un compresseur (1) dont la capacité peut être commandée, une unité extérieure (A) possédant un échangeur de chaleur extérieur (4), une pluralité d'unités intérieures (B,C,D) possédant chacune un échangeur de chaleur intérieur (8b,8c,8d), qui sont disposées en parallèle, des soupapes électromagnétiques (11b,11c,11d) prévues chacune dans les canalisations respectives (12b,12c,12d) raccordées auxdits échangeurs de chaleur intérieurs et dans lesquelles circule un réfrigérant gazeux, et des soupapes de détente (9b,9c,9d) prévues dans les canalisations respectives (10b,10c,10d) raccordées auxdits échangeurs de chaleur intérieurs et dans lesquelles circule un réfrigérant liquide, ledit précédé consistant à commander lesdites soupapes de détente au moyen d'une commande PID sur la base de conditions de fonctionnement, caractérisée en ce qu'on interrompt la commande PID lors d'une modification de la vitesse du compresseur et/ou du nombre d'unités en fonctionnement, que l'on commande simultanément la fréquence d'entrée dudit compresseur et le degré d'ouverture desdites soupapes de détente sur la base de signaux représentant une charge de conditionnement d'air et/ou représentant une modification du nombre des unités intérieures en fonctionnement, et qu'ensuite on reprend la commande PID lorsque les conditions du réfrigérant sont devenues stationnaires.

## Patentansprüche

1. Verfahren zum Betreiben einer Klimaanlage mit einem Kühlkreis mit einem Kompressor (1) mit steuerbarer Leistung, einer äußeren Einheit (A) mit einem äußeren Wärmeaustauscher (4), mehreren inneren Einheiten (B, C, D) mit je einem inneren Wärmeaustauscher (8b, 8c, 8d), die parallel zueinander angeordnet sind, Magnetventilen (11b, 11c, 11d), die je in einer jeweils an die inneren Wärmeaustauscher angeschlossenen Leitung (12b, 12c, 12d) vorgesehen sind, durch die das gasförmige Kühlmittel fließt, und Expansionsventilen (9b, 9c, 9d), die in den jeweiligen, an die inneren Wärmeaustauscher angeschlossenen Leitungen (10b, 10c, 10d) vorgesehen sind, durch die das flüssige Kühlmittel strömt, wobei die Expansionsventile durch PID-Regelung auf der Basis von Betriebsbedingungen geregelt werden, dadurch gekennzeichnet, daß die PID-Regelung unterbrochen wird, wenn die Kompressordrehzahl und/oder die Anzahl der in Betrieb befindlichen Einheiten geändert wird, daß die Eingangsfrequenz des Kompressors und die Öffnungsweite der Expansionsventile gleichzeitig auf der Basis von Signalen geregelt werden, die eine Klimatisierungsbelastung und/oder eine Änderung der Anzahl in Betrieb befindlicher innerer Einheiten darstellen, und daß darauf, wenn die Klimatisierungsbedingungen beständig geworden sind, die PID-Regelung wieder aufgenommen wird.

FIG. 1

# FIG. 2

CHANGE CURVE 19 OF TEMPERATURE (PRESSURE) OF GASEOUS REFRIGERANT FROM COMPRESSOR

TEMPERATURE (PRESSURE)

19a

19b

OPENING DEGREE

18a

18b

EXPANSION VALVE OPENING DEGREE CHANGE CURVE 18

17a

17b

FREQUENCY

TIME

COMPRESSOR INPUT FREQUENCY CHANGE CURVE 17

EP 0 282 772 B1

FIG. 3

```
                          ┌─────────────┐
                          │    START     │
                          └─────────────┘
                                 │
    ┌────────────────────────────────────────────────────┐
    │  READ SET-UP ROOM TEMP.   AND  CHANGE               │
    │  OF  INDOOR  UNIT  LOAD  BY  TERMINAL               │
    │  BOARD  14  AND  SENSOR  15                          │
    └────────────────────────────────────────────────────┘
                                 │
    ┌────────────────────────────────────────────────────┐
    │  CALCULATE   CHANGE  OF  COMPRESSOR                  │
    │  INPUT  FREQUENCY   BY   PRIMARY                     │
    │  CONTROLLER  13                                      │
    └────────────────────────────────────────────────────┘
                                 │
    ┌────────────────────────────────────────────────────┐
    │  CALCULATE   OPENING   DEGREE  OF                    │
    │  EXPANSION   VALVE   CORRESPONDING                   │
    │  TO  CHANGED   INPUT   FREQUENCY                     │
    └────────────────────────────────────────────────────┘
                                 │
    ┌────────────────────────────────────────────────────┐
    │  PRIMARY   CONTROLLER  13  OPERATES                  │
    │  EXPANSION   VALVE  OPENING   OUTPUTTING            │
    │  MEANS  16  TO  OUTPUT  CALCULATED                   │
    │  OPENING   DEGREE  SIGNAL  TO  EXPANSION            │
    │  VALVE                                               │
    └────────────────────────────────────────────────────┘
                                 │
    ┌────────────────────────────────────────────────────┐
    │  SET  EXPANSION  VALVE  IN  CALCULATED              │
    │  OPENING   DEGREE                                    │
    └────────────────────────────────────────────────────┘
                                 │
                          ┌─────────────┐
                          │    END       │
                          └─────────────┘
```

# F I G. 5

COMPRESSOR INPUT
FREQUENCY

# F I G. 6

INDOOR UNIT
HORSE POWER